# EUROPEAN PATENT SPECIFICATION

(11) **EP 3 907 471 B1**
(45) Date of publication and mention of the grant of the patent: **02.08.2023**
(21) Application number: 20741814.6
(22) Date of filing: 09.01.2020
(51) Int. Cl.: G01C 21/20, G01C 21/34, H04W 4/024

(54) **NAVIGATION METHOD AND RELATED PRODUCT**
NAVIGATIONSVERFAHREN UND ZUGEHÖRIGES PRODUKT
PROCÉDÉ DE NAVIGATION ET PRODUIT ASSOCIÉ

(30) Priority: 14.01.2019 CN 201910035116
(43) Date of publication of application: 10.11.2021
(73) Proprietor: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Manitz Finsterwald Patent- und Rechtsanwaltspartnerschaft mbB
(86) International application number: PCT/CN2020/071253
(87) International publication number: WO 2020/147646

(56) References cited:
- US-A1- 2014 257 695
- US-B1- 8 311 741

## Description

### CROSS-REFERENCE TO RELATED APPLICATION(S)

This application claims priority to Chinese Patent Application No. 201910035116.1, filed on January 14, 2019, and entitled "NAVIGATION METHOD AND RELATED PRODUCTS".

### TECHNICAL FIELD

This disclosure relates to the technical field of electronic devices, and particularly to a navigation method and related products. Related technologies are known from US 8311741 B1 and US 2014/0257695 A1.

### BACKGROUND

With the rapid popularization of electronic devices such as mobile phones and tablet computers, people can visit a network through the electronic device to obtain various information such as navigation information. However, navigation has a high demand for a real-time performance of the network. Therefore, improving a network quality during navigation has become a technical problem to be solved in the field.

### SUMMARY

The present invention is defined in the independent claims. In a first aspect of implementations of the disclosure, a navigation method is provided, as defined in claim 1.

In a second aspect of implementations of the disclosure, an electronic device is provided, as defined in claim 9.

In a third aspect of implementations of the disclosure, a computer-readable storage medium is provided, as defined in claim 10.

### BRIEF DESCRIPTION OF THE DRAWINGS

In order to describe technical solutions of implementations or the related art more clearly, the following will give a brief description of accompanying drawings used for describing the implementations or the related art. Apparently, accompanying drawings described below are merely some implementations. Those of ordinary skill in the art can also obtain other accompanying drawings based on the accompanying drawings described below without creative efforts.
FIG. 1 is a schematic flowchart illustrating a navigation method according to implementations.
FIG. 2 is a network architecture diagram illustrating a navigation system according to implementations.
FIG. 3 is a schematic flowchart illustrating a navigation method according to other implementations.
FIG. 4 is a schematic structural diagram illustrating an electronic device according to implementations.
FIG. 5 is a schematic structural diagram illustrating a navigation device according to implementations.

### DETAILED DESCRIPTION

In order for those skilled in the art to better understand technical solutions of the disclosure, technical solutions of implementations will be described clearly and completely with reference to accompanying drawings in the implementations. Apparently, implementations described below are merely some implementations, rather than all implementations of the disclosure.

"Electronic device" in implementations of the disclosure may include various handheld devices with wireless communication functions, on-board devices, wearable devices, computing devices, or other processing devices connected to a wireless modem, as well as various forms of user equipment (LTE), mobile stations (MS), terminal devices, etc. For convenience of description, the above-mentioned devices are collectively referred to as electronic devices. Hereinafter, implementations of the disclosure will be described in detail.

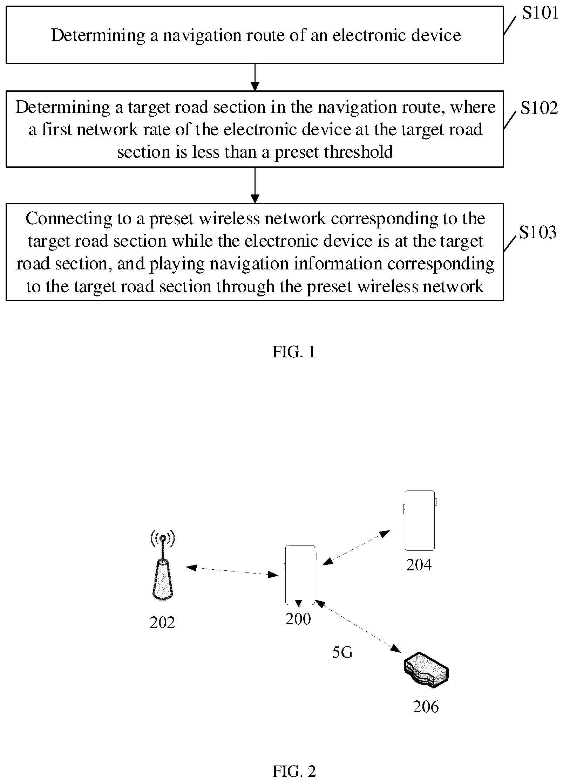

FIG. 1 is a schematic flowchart illustrating a navigation method according to implementations. The navigation method is applicable to an electronic device. The electronic device can adopt link aggregation. Link aggregation allows a device to use two or more network ports to access a network at the same time. For example, a mobile phone can access a wireless-fidelity (Wi-Fi) network and a mobile data network simultaneously by enabling the link aggregation. The Wi-Fi network is also known as wireless network.

Multiple networks to which the electronic device is connected are not limited in the disclosure. FIG. 2 illustrates a network architecture. As illustrated in FIG. 2, an electronic device 200 may be connected to a mobile data network provided by a first base station 202. The mobile data network can provide networks of different frequency bands, for example, the 2nd-Generation (2G) wireless telephone technology network, the 3rd-Generation (3G) mobile communication technology network, the 4th-Generation (4G) mobile communication technology network, the 5th-Generation (5G) mobile communication technology network. The electronic device 200 may also be connected to wireless networks provided by different devices. For example, a Wi-Fi network and a Bluetooth network provided by a first hotspot device 204, and a 2.4 GHz Wi-Fi network and a 5 GHz Wi-Fi network provided by a first router 206.

For security considerations, authentication is required for the wireless network. In some implementations, when the electronic device accesses a wireless network, the wireless network needs to verify identity information of the electronic device. When the verification passes, a network connection with the electronic device is established. For example, a network name of the wireless network is *sanhuan,* and an authentication password is 65498231, a connection between the wireless network and the electronic device is established only when the electronic device submits 65498231.

As illustrated in FIG. 1, a navigation method includes the following.

At block S 101, a navigation route of an electronic device is determined.

In the disclosure, the navigation route may be a route for driving or a route for pedestrians, which is not limited herein. If the electronic device is connected to an on-board device or located in a garage, the route for driving can be determined first. The navigation route herein may be a navigation route automatically recommended by the electronic device according to multiple reference routes searched by the electronic device, or a navigation route selected by a user according to multiple reference routes displayed on the electronic device.

In some implementations, the navigation route of the electronic device is determined as follows. An origin and a destination of the electronic device are determined. Search for multiple reference routes between the origin and the destination. Multiple evaluation values are obtained by determining an evaluation value of each of the multiple reference routes. A reference route corresponding to the maximum value in the multiple evaluation values is selected as the navigation route.

The origin herein refers to a start position of a navigation operation, which may be a current position of the electronic device or a position inputted by the user on the electronic device. The destination herein refers to an end position of the navigation operation, which may be a position inputted by the user on the electronic device, or a position in a shared route, which is not limited in the disclosure. The current position may be determined by a positioning module of the electronic device, or determined according to a signal direction of a network device and a distance between the electronic device and the network device, where the distance is determined according to a network rate of the network device searched.

The positioning module may be a global positioning system (GPS) module or a wireless local area network (WLAN) module. The GPS module can perform real-time positioning and navigation on a global scale by means of GPS positioning satellites. The WLAN module can communicate in the air through a radio frequency technology and electromagnetic waves. A positioning method of the WLAN module can be implemented based on a connected hotspot device, such as a wireless router or a hotspot-enabled electronic device.

In the disclosure, the multiple reference routes are each correspond to the origin and the destination of the electronic device. The manner of determining the evaluation value of each of the multiple reference routes is not limited in the disclosure. The evaluation value of each of the multiple reference routes can be determined according to multiple pieces of information of the reference route, such as a route length, a speed limit, a traffic congestion state, a network state, tolls, and a user's familiarity with the reference route, so as to determine the advantages and disadvantages of each reference route.

According to implementations of the disclosure, an origin and a destination of the electronic device are determined. Search for multiple reference routes according to the origin and the destination. An evaluation value of each of the multiple reference routes is determined. A reference route corresponding to the maximum value in multiple evaluation values is selected as the navigation route. As such, user experience for navigation can be improved.

In some implementations, the multiple evaluation values are obtained by determining the evaluation value of each of the multiple reference routes as follows. A current time of the electronic device is determined. For each target reference road section of a target reference route, a traffic speed corresponding to the target reference road section is determined according to the current time. For each target reference road section of the target reference route, a route length of the target reference road section is determined. Estimated duration of the target reference route is determined according to the route length and the traffic speed corresponding to each target reference road section of the target reference route. The evaluation value of the target reference route is determined according to the estimated duration.

The current time herein may be determined according to a time manager of the electronic device.

The target reference route herein is any of the multiple reference routes, and the target reference route includes multiple target reference road sections.

The traffic speed herein represents a traffic congestion state of the target reference road section. The higher the traffic speed, the less congested the target reference road section. On the contrary, the lower the traffic speed, the more congested the target reference road section. In practice, the traffic speed should be less than or equal to a speed limit corresponding to the target reference road section.

In the disclosure, the manner of determining the evaluation value is described by taking a target reference route as an example. For other reference road sections among the multiple reference road sections, the evaluation value can be determined in a similar manner as described above, which will not be repeated herein. In some implementations, a traffic congestion state of each target reference road section is determined according to the current time, because the traffic congestion state of each road section varies with time, especially during rush hours, weekends, or holidays, and so on. That is, a traffic speed of the electronic device at each target reference road section is determined. Then travel duration corresponding to the target reference road section is estimated based on the traffic speed and the route length of the target reference road section, to obtain the estimated duration corresponding to the target reference route. The greater the evaluation value of the target reference route, the shorter the estimated duration of the target reference route. In the disclosure, a route for navigation ("navigation route" for short) is one of the multiple reference routes which has the maximum evaluation value among the multiple evaluation values, which is conducive to shortening travel duration of the navigation route, thereby improving user experience for navigation.

At block S 102, a target road section in the navigation route is determined, where a first network rate of the electronic device at the target road section is less than a preset threshold.

The preset threshold herein is not limited in the disclosure. The preset threshold may be determined according to the minimum network rate currently required by the electronic device. The navigation route includes multiple navigation road sections. If the first network rate of the electronic device at one of the multiple navigation road sections is less than the preset threshold, the navigation road section is determined as the target road section. The target road section herein may include one or more target road sections, which is not limited in the disclosure.

The navigation route includes multiple navigation road sections. The target road section in the navigation route is determined as follows. Multiple historical usage record sets are obtained by obtaining a historical usage record set of a mobile data network used by the electronic device at each of the multiple navigation road sections. Multiple second network rates are obtained by determining a network rate corresponding to each of the multiple navigation road sections according to the multiple historical usage record sets. A navigation road section, which corresponds to a second network rate that is less than the preset threshold among the multiple second network rates, is determined as the target road section.

The historical usage record set herein includes multiple historical usage records of the mobile data network used by the electronic device at the road section. Each of the multiple historical usage record includes a network rate, and may include at least one of usage duration, the number of used networks, a drop rate of the used network, etc.

A historical usage record set of a mobile data network used by the electronic device at each navigation road section is obtained. A network rate corresponding to each navigation road section is determined according to multiple historical usage record sets, to obtain multiple second network rates. A navigation road section, which corresponds to a second network rate that is less than the preset threshold among the multiple second network rates, is determined as the target road section. As such, the second network rate corresponding to each navigation road section can be determined based on the multiple historical usage record sets, which is beneficial to improving accuracy of determining of the second network rate, and accordingly, accuracy of determining of the target road section can be improved.

The manner of determining the second network rate according to the historical usage record sets is not limited in the disclosure. In some implementations, the multiple second network rates are obtained by determining the network rate corresponding to each of the multiple navigation road sections according to the multiple historical usage record sets as follows. A network rate and a usage frequency (i.e., the number of times of usage) of each of multiple antennas of the electronic device are determined according to the historical usage record set of the mobile data network used by the electronic device at a reference navigation road section, to obtain multiple reference network rates and multiple usage frequencies. The usage frequency of each of the multiple antennas is counted according to the historical usage record set corresponding to the reference navigation road section, to obtain the multiple usage frequencies. A weight of each of the multiple antennas is determined according to the multiple usage frequencies, to obtain multiple weights. A second network rate corresponding to the reference navigation road section is determined according to the multiple reference network rates and the multiple weights.

The reference navigation road section herein is any of the multiple navigation road sections.

The multiple antennas may be patch antennas, flexible printed circuit (FPC) antennas, laser direct structuring (LDS) antennas, print direct structuring (PDS) antennas, and so on. The multiple antennas include antennas that support mobile data networks of 2G, 3G, 4G, or 5G frequency bands, and so on.

In the disclosure, the manner of determining the second network rate is described by taking a reference navigation road section as an example. For other navigation road sections among the multiple navigation road sections, the second network rate can be determined in a similar manner as described above, which will not be repeated herein. In some implementations, for each of multiple antennas of the electronic device, a usage frequency and a reference network rate of the antenna are determined according to a historical usage record set of a mobile wireless network used by the electronic device at a reference navigation road section. Then, a weight of each of the multiple antennas is determined according to multiple usage frequencies, to obtain multiple weights. The second network rate corresponding to the reference navigation road section is determined according to multiple reference network rates and the multiple weights. As such, the second network rate corresponding to the reference navigation road section can be determined based on the multiple reference network rates and the multiple usage frequencies corresponding to the reference navigation road section, which is beneficial to improving accuracy of determining of the second network rate.

In some implementations, the navigation method further includes the following. Multiple speed limits are obtained by determining a speed limit of each of the multiple navigation road sections. The preset threshold is determined according to the multiple speed limits.

The speed limit herein represents the lowest or highest speed at a navigation road section. In these implementations, the minimum value of the multiple speed limits may be obtained to determine the preset threshold, the average of the multiple speed limits may be obtained to determine the preset threshold, a proportional value of the average may be obtained to determine the preset threshold, or the like, which is not limited herein.

According to implementations of the disclosure, the preset threshold can be determined according to the speed limit of each navigation road section of the navigation route, which is beneficial to improving accuracy of selecting of the target road section according to the preset threshold.

At block S 103, while the electronic device is at the target road section, connect to a preset wireless network corresponding to the target road section, and navigation information corresponding to the target road section is played through the preset wireless network.

In the disclosure, the preset wireless network may be a candidate wireless network at the target road section, and the manner of determining the preset wireless network is not limited herein. In some implementations, the navigation method further includes the following. Search for multiple reference wireless networks corresponding to the target road section. Multiple performance parameters are obtained by obtaining a performance parameter of each of the multiple reference wireless networks. Multiple network-quality values are obtained by obtaining a network-quality value of each of the multiple reference wireless networks according to the multiple performance parameters. A reference wireless network corresponding to the maximum value in the multiple network-quality values is determined as the preset wireless network.

The reference wireless network herein is a safety network at the target road section that has been successfully verified or that does not need to be verified, where the safety network may be a network that has not been registered in a preset database.

The performance parameter herein may include multiple pieces of network information, for example, including at least one of a network drop rate, a network rate, a received signal strength, and a transmit power, which is not limited in the disclosure.

The network-quality value herein represents a network quality of each of the multiple reference wireless networks at the target road section. The network-quality value may be obtained by performing weighted calculation on evaluation values of the multiple pieces of network information according to weights corresponding to the multiple pieces of network information stored by the electronic device in advance. As such, the evaluation value of each piece of network information and the weight of the network information can be taken into consideration, thereby improving accuracy of determining of the first network-quality value.

According to implementations of the disclosure, multiple reference wireless networks capable of connecting with the electronic device at the target road section are searched. A performance parameter of each of the multiple reference wireless networks is determined to obtain multiple performance parameters. A network-quality value of each of the multiple reference wireless networks is obtained according to the multiple performance parameters, to obtain multiple network-quality values. A reference wireless network corresponding to the maximum value in the multiple network-quality values is determined as the preset wireless network. As such, a network quality of navigation based on the preset wireless network can be improved.

According to the navigation method described with reference to FIG. 1, a navigation route of the electronic device is determined. A target road section in the navigation route is determined, where a first network rate of the electronic device at the target road section is less than a preset threshold. Connect to a preset wireless network corresponding to the target road section while the electronic device is at the target road section. Navigation information corresponding to the target road section is played through the preset wireless network. As such, the electronic device can perform navigation based on the preset wireless network, which is beneficial to improving a network quality of the electronic device at the target road section, and accordingly, a network quality for navigation can be improved.

In some implementations, the navigation method further includes the following. A third network rate of the preset wireless network is determined. In response to the third network rate being less than the preset threshold, driving information corresponding to the target road section is obtained according to the historical usage record set of the mobile wireless network used by the electronic device at the target road section. The navigation information is generated according to the driving information. In response to the electronic device arriving at an origin of the target road section, the navigation information is played.

The driving information herein may include a driving direction, a speed limit, and a driving speed at the target road section, and so on.

According to implementations of the disclosure, a third network rate of the preset wireless network is determined. If the third network rate is less than the preset threshold, driving information corresponding to the target road section is obtained according to the historical usage record set of the mobile data network used by the electronic device at the target road section. The navigation information corresponding to the target road section is generated according to the driving information. The navigation information is played when the electronic device arrives at an origin of the target road section. As such, offline navigation information of the target road section can be generated based on the previously stored driving information, thereby improving a network fault handling capability.

In the disclosure, the third network rate may be obtained by means of a network-rate detection module of the electronic device, or may be obtained based on a network parameter corresponding to the target road section and a relative distance between a network device of the preset wireless network and the electronic device, which is not limited herein.

In some implementations, the third network rate of the preset wireless network is determined as follows. A performance parameter of a network device corresponding to the preset wireless network is determined. A fourth network rate is determined according to the performance parameter of the network device. A relative distance between the network device and the electronic device is determined. A driving speed of the electronic device at the target road section is determined. A network-rate influence value is determined according to the relative distance and the driving speed. A product between the network-rate influence value and the fourth network rate is determined as the third network rate.

The performance parameter of the network device corresponding to the preset wireless network may include multiple pieces of network information, such as a network drop rate, a network rate, a received signal strength, and a transmit power, which is not limited in the disclosure.

How to determine the relative distance between the network device and the electronic device is not limited in the disclosure. In some implementations, a neighborhood aware networking (NAN) connection is established with the network device. The relative distance between the network device and the electronic device is detected through NAN-based ranging.

The neighborhood aware networking, also known as wireless-fidelity alliance (Wi-Fi alliance), is described as NAN in implementations of the disclosure. NAN function is mainly used to implement a real-time and efficient discovery mechanism, thereby extending Wi-Fi functions and improving application experience in real time.

The NAN-based ranging is used to detect a distance between devices that establish an NAN connection. The distance may be obtained by the electronic device or the network device, which is not limited in the disclosure.

If an NAN connection between the network device corresponding to the preset wireless network and the electronic device is established, the relative distance between the network device and the electronic device can be obtained by the electronic device through the NAN-based ranging, or the relative distance between the network device and the electronic device can be obtained by the network device through the NAN-based ranging, and then sent to the electronic device.

In the disclosure, the driving speed may be determined according to the driving information corresponding to the target road section, or the traffic speed corresponding to the target road section is determined as the driving speed with the help of the manner of determining the multiple evaluation values described above, which is not limited herein.

According to implementations of the disclosure, a performance parameter of a network device corresponding to the preset wireless network is determined. An estimated fourth network rate of the preset wireless network capable of being used by the electronic device is determined according to the performance parameter. A driving speed of the electronic device at the target road section and a relative distance between the electronic device and the network device are determined. The movement of the electronic device (i.e., a mobile speed) may affect a network rate of the wireless network. For example, for an electronic device on a high-speed train, a network signal will be relatively unstable, and the longer a distance from the network device, the weaker the network signal will be. To this end, in the disclosure, the network-rate influence value is determined according to the driving speed of the electronic device at the target road section and the relative distance between the network device corresponding to the preset wireless network and the electronic device. The third network rate is determined according to a product of the fourth network rate and the network-rate influence value. In the disclosure, influences of the driving speed and the relative distance on the network rate are taken into consideration, which is beneficial to improving accuracy of determining of the third network rate.

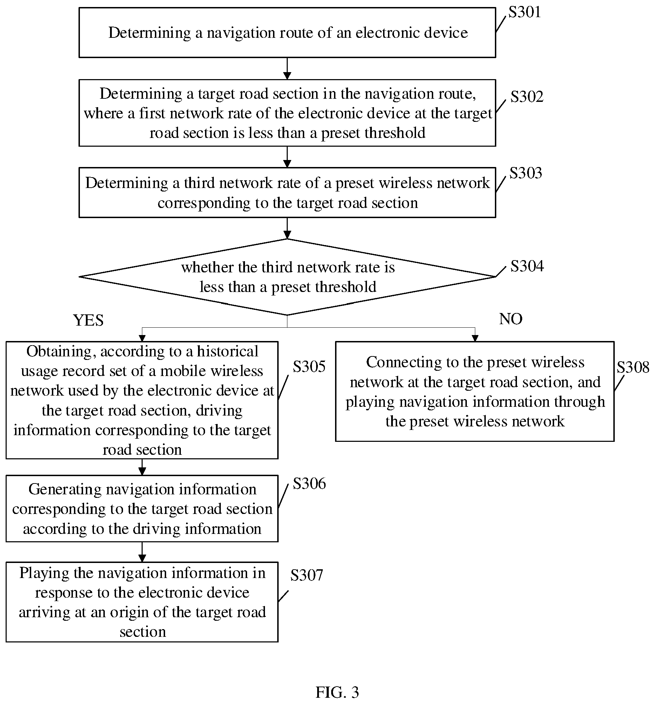

Similar to the above implementations described with reference to FIG. 1, FIG. 3 is a schematic flowchart illustrating a navigation method according to other implementations. As illustrated in FIG. 3, the navigation method includes the following.

At block S301, a navigation route of an electronic device is determined.

At block S302, a target road section in the navigation route is determined, where a first network rate of the electronic device at the target road section is less than a preset threshold.

At block S303, a third network rate of a preset wireless network corresponding to the target road section is determined.

At block S304, whether the third network rate is less than the preset threshold is determined.

If the third network rate is less than the preset threshold, proceed to operations at block S305. Otherwise, proceed to operations at block S308.

At block S305, driving information corresponding to the target road section is obtained according to a historical usage record set of a mobile wireless network used by the electronic device at the target road section.

At block S306, navigation information corresponding to the target road section is generated according to the driving information.

At block S307, when the electronic device arrives at an origin of the target road section, the navigation information is played.

At block S308, connect to the preset wireless network at the target road section, and navigation information is played through the preset wireless network.

According to the navigation method described with reference to FIG. 3, a navigation route of the electronic device is determined. A target road section in the navigation route is determined, where a first network rate of the electronic device at the target road section is less than a preset threshold. A third network rate of a preset wireless network is determined. If the third network rate is less than the preset threshold, driving information corresponding to the target road section is obtained according to a historical usage record set of a mobile data network used by the electronic device at the target road section, navigation information corresponding to the target road section is generated according to the driving information, and the navigation information is played when the electronic device arrives at an origin of the target road section. If the third network rate is greater than or equal to the preset threshold, connect to the preset wireless network at the target road section, and the navigation information is played through the preset wireless network. As such, the electronic device can perform navigation in different network states, thereby improving a network fault handling capability of the electronic device at the target road section.

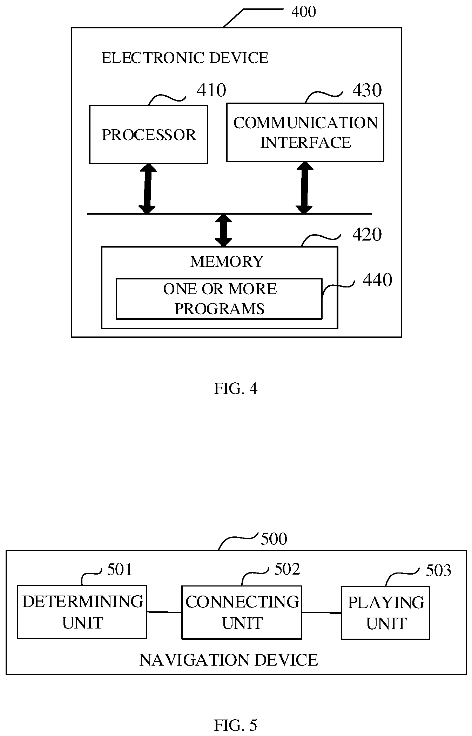

Similar to the above implementations described with reference to FIG. 1, FIG. 4 is a schematic structural diagram illustrating an electronic device according to implementations. As illustrated in FIG. 4, the electronic device 400 includes a processor 410, a memory 420, a communication interface 430, and one or more programs 440. The one or more programs 440 are stored in the memory 420 and configured to be executed by the processor 410. The programs 440 include instructions which are operable with the processor 410 to execute the following operations. A navigation route of the electronic device 400 is determined. A target road section in the navigation route is determined, where a first network rate of the electronic device 400 at the target road section is less than a preset threshold. Connect to a preset wireless network corresponding to the target road section while the electronic device is at the target road section. Navigation information corresponding to the target road section is played through the preset wireless network.

According to implementations of the disclosure, navigation is performed based on the preset wireless network, which is beneficial to improving a network quality of the electronic device 400 at the target road section, and accordingly, a network quality for navigation can be improved.

In some implementations, the instructions of the programs 440 operable with the processor to determine the navigation route of the electronic device 400 are operable with the processor to: determine an origin and a destination of the electronic device 400; search for multiple reference routes between the origin and the destination; obtain multiple evaluation values by determining an evaluation value of each of the multiple reference routes; and select a reference route corresponding to the maximum value in the multiple evaluation values as the navigation route.

In some implementations, the instructions of the programs 440 operable with the processor to obtain the multiple evaluation values by determining the evaluation value of each of the multiple reference routes are operable with the processor to: determine a current time of the electronic device 400; for each target reference road section of a target reference route, determine a traffic speed corresponding to the target reference road section according to the current time, where the target reference route is any of the multiple reference routes; for each target reference road section of the target reference route, determine a route length of the target reference road section; determine estimated duration of the target reference route according to the route length and the traffic speed corresponding to each target reference road section of the target reference route; and determine the evaluation value of the target reference route according to the estimated duration.

The navigation route includes multiple navigation road sections. The instructions of the programs 440 operable with the processor to determine the target road section in the navigation route are operable with the processor to: obtain multiple historical usage record sets by obtaining a historical usage record set of a mobile data network used by the electronic device 400 at each of the multiple navigation road sections; obtain multiple second network rates by determining a network rate corresponding to each of the multiple navigation road sections according to the multiple historical usage record sets; and determine a navigation road section, which corresponds to a second network rate that is less than the preset threshold among the multiple second network rates, as the target road section.

In some implementations, the instructions of the programs 440 operable with the processor to obtain the multiple second network rates by determining the network rate corresponding to each of the multiple navigation road sections according to the multiple historical usage record sets are operable with the processor to: obtain multiple reference network rates and multiple usage frequencies by determining a network rate and a usage frequency of each of multiple antennas of the electronic device 400 according to the multiple historical usage record sets, where the reference navigation road section is any of the multiple navigation road sections; obtain multiple weights by determining a weight of each of the multiple antennas according to the multiple usage frequencies; and determine a second network rate corresponding to the reference navigation road section according to the multiple reference network rates and the multiple weights.

In some implementations, the instructions of the programs 440 are further operable with the processor to: determine a third network rate of the preset wireless network; obtain, according to the historical usage record set of the mobile wireless network used by the electronic device 400 at the target road section, driving information corresponding to the target road section in response to the third network rate being less than the preset threshold; generate the navigation information according to the driving information; and play offline navigation information in response to the electronic device 400 arriving at an origin of the target road section.

In some implementations, the instructions of the programs 440 operable with the processor to determine the third network rate of the preset wireless network are operable with the processor to: determine a performance parameter of a network device corresponding to the preset wireless network; determine a fourth network rate according to the performance parameter of the network device; determine a relative distance between the network device and the electronic device 400; determine a driving speed of the electronic device 400 at the target road section; determine a network-rate influence value according to the relative distance and the driving speed; and determine a product between the network-rate influence value and the fourth network rate as the third network rate.

In some implementations, the instructions of the programs 440 are further operable with the processor to: obtain multiple speed limits by determining a speed limit of each of the multiple navigation road sections; and determine the preset threshold according to the multiple speed limits.

In some implementations, the instructions of the programs 440 are further operable with the processor to: search for multiple reference wireless networks corresponding to the target road section; obtain multiple performance parameters by obtaining a performance parameter of each of the multiple reference wireless networks; obtain multiple network-quality values by obtaining a network-quality value of each of the multiple reference wireless networks according to the multiple performance parameters; and determine a reference wireless network corresponding to the maximum value in the multiple network-quality values as the preset wireless network.

The foregoing technical solutions of the implementations of the disclosure are mainly described from the viewpoint of execution of the method. It can be understood that, in order to implement the above functions, the electronic device includes hardware structures and/or software modules corresponding to the respective functions. Those skilled in the art should readily recognize that, in combination with the exemplary units and scheme steps or operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units (or modules) may be divided for the electronic device in accordance with the foregoing method implementations. For example, functional units may be divided according to corresponding functions, and two or more functions may be integrated into one processing unit. The above-mentioned integrated unit can be implemented in the form of hardware or software functional units. It should be noted that the division of units in implementations of the disclosure is schematic and is merely a logical function division; there may be other division manners in actual implementation.

FIG. 5 is a schematic structural diagram illustrating a navigation device according to implementations. The navigation device is applicable to the electronic device described with reference to FIG. 2. As illustrated in FIG. 5, a navigation device 500 includes a determining unit 501, a connecting unit 502, and a playing unit 503. The determining unit 501 is configured to determine a navigation route of the electronic device; determine a target road section in the navigation route, and the first network rate of the electronic device on the target road section is less than a preset threshold. The connecting unit 502 is configured to connect to the preset wireless network corresponding to the target road section while the electronic device is at the target road section. The playing unit 503 is configured to play the navigation information corresponding to the target road section based on the preset wireless network.

According to implementations of the disclosure, navigation is performed based on the preset wireless network, which is beneficial to improving a network quality of the electronic device at the target road section, and accordingly, a network quality for navigation can be improved.

In some implementations, the determining unit 501 configured to determine the navigation route of the electronic device is configured to: determine an origin and a destination of the electronic device; search for multiple reference routes between the origin and the destination; obtain multiple evaluation values by determining an evaluation value of each of the multiple reference routes; and select a reference route corresponding to the maximum value in the multiple evaluation values as the navigation route.

In some implementations, the determining unit 501 configured to obtain the multiple evaluation values by determining the evaluation value of each of the multiple reference routes is configured to: determine a current time of the electronic device; for each target reference road section of a target reference route, determine a traffic speed corresponding to the target reference road section according to the current time, where the target reference route is any of the multiple reference routes; for each target reference road section of the target reference route, determine a route length of the target reference road section; determine estimated duration of the target reference route according to the route length and the traffic speed corresponding to each target reference road section of the target reference route; and determine the evaluation value of the target reference route according to the estimated duration.

The navigation route includes multiple navigation road sections. The determining unit 501 configured to determine the target road section in the navigation route is configured to: obtain multiple historical usage record sets by obtaining a historical usage record set of a mobile data network used by the electronic device at each of the multiple navigation road sections; obtain multiple second network rates by determining a network rate corresponding to each of the multiple navigation road sections according to the multiple historical usage record sets; and determine a navigation road section, which corresponds to a second network rate that is less than the preset threshold among the multiple second network rates, as the target road section.

In some implementations, the determining unit 501 configured to obtain the multiple second network rates by determining the network rate corresponding to each of the multiple navigation road sections according to the multiple historical usage record sets is configured to: obtain multiple reference network rates and multiple usage frequencies by determining a network rate and a usage frequency of each of multiple antennas of the electronic device according to the multiple historical usage record sets, where the reference navigation road section is any of the multiple navigation road sections; obtain multiple weights by determining a weight of each of the multiple antennas according to the multiple usage frequencies; and determine a second network rate corresponding to the reference navigation road section according to the multiple reference network rates and the multiple weights.

In some implementations, the determining unit 501 is further configured to: determine a third network rate of the preset wireless network; obtain, according to the historical usage record set of the mobile wireless network used by the electronic device at the target road section, driving information corresponding to the target road section in response to the third network rate being less than the preset threshold; and generate the navigation information according to the driving information. The playing unit 503 is further configured to play offline navigation information in response to the electronic device arriving at an origin of the target road section.

In some implementations, the determining unit 501 configured to determine the third network rate of the preset wireless network is configured to: determine a performance parameter of a network device corresponding to the preset wireless network; determine a fourth network rate according to the performance parameter of the network device; determine a relative distance between the network device and the electronic device; determine a driving speed of the electronic device at the target road section; determine a network-rate influence value according to the relative distance and the driving speed; and determine a product between the network-rate influence value and the fourth network rate as the third network rate.

In some implementations, the determining unit 501 is further configured to: obtain multiple speed limits by determining a speed limit of each of the multiple navigation road sections; and determine the preset threshold according to the multiple speed limits.

In some implementations, the determining unit 501 is further configured to: search for multiple reference wireless networks corresponding to the target road section; obtain multiple performance parameters by obtaining a performance parameter of each of the multiple reference wireless networks; obtain multiple network-quality values by obtaining a network-quality value of each of the multiple reference wireless networks according to the multiple performance parameters; and determine a reference wireless network corresponding to the maximum value in the multiple network-quality values as the preset wireless network.

According to implementations of the disclosure, a computer-readable storage medium is further provided. The computer-readable storage medium is configured to store computer programs. The computer programs are operable with a computer to execute all or part of the operations of the method described in the foregoing method implementations. "Computer" referred to herein includes an electronic device.

According to implementations of the disclosure, a computer program product is further provided. The computer program product includes a non-transitory computer-readable storage medium configured to store computer programs. The computer programs are operable with a computer to execute all or part of the operations of the method described in the foregoing method implementations. The computer program product may be a software installation package. "Computer" referred to herein includes an electronic device.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In implementations of the disclosure, it should be understood that, the device/apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units through some interfaces, and may be electrical connection or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to execute all or part of the operations described in the various implementations of the disclosure. The memory includes various medium capable of storing program codes, such as a universal serial bus (USB), a read-only memory (ROM), a random access memory (RAM), a mobile hard disk, Disk, compact disc (CD), or other medium that can store program codes.

It will be understood by those of ordinary skill in the art that all or part of the various methods of the implementations described above may be accomplished by means of a program to instruct associated hardware, the program may be stored in a computer-readable memory, which may include a flash memory, a ROM, a RAM, Disk or CD, and so on.

While the principles and implementations of the disclosure have been described in connection with illustrative implementations, it is to be understood that foregoing implementations are merely used to help understand the method and the core idea of the disclosure. As will occur to those skilled in the art, the disclosure is susceptible to various modifications and changes within the scope defined by the appended claims.

## Claims

1. A navigation method, for an electronic device (400), comprising:
determining (S101, S301) a navigation route of the electronic device, wherein the navigation route comprises a plurality of navigation road sections;
determining (S102, S302) at least one target road section in the navigation route; and connecting (S 103) the electronic device to a preset wireless network corresponding to the target road section while the electronic device is at the target road section, and providing (S103) navigation information corresponding to the target road section through the preset wireless network, wherein the preset wireless network is a Wi-Fi network or a Bluetooth network; and
wherein determining the at least one target road section in the navigation route comprises
obtaining a plurality of historical usage record sets, by obtaining a historical usage record set of the mobile data network used by the electronic device at each of the plurality of navigation road sections;
obtaining a plurality of network speeds, by determining a network speed corresponding to each of the plurality of navigation road sections according to the plurality of historical usage record sets, wherein the historical usage record set corresponding to one of the plurality of navigation road sections comprises a plurality of historical usage records of the mobile data network used by the electronic device at the navigation road section, and each of the plurality of historical usage records comprises a network speed; and
determining at least one target road section, wherein the target road section corresponds to the network speed being less than a preset threshold among said plurality of navigation road sections corresponding to said plurality of network speeds.

2. The method of claim 1, wherein determining the navigation route of the electronic device comprises:
determining an origin and a destination of the electronic device;
searching for a plurality of reference routes between the origin and the destination;
obtaining a plurality of evaluation values by determining an evaluation value of each of the plurality of reference routes; and
selecting a reference route corresponding to the maximum value in the plurality of evaluation values as the navigation route.

3. The method of claim 2, wherein obtaining the plurality of evaluation values by determining the evaluation value of each of the plurality of reference routes comprises:
determining a current time of the electronic device;
for each target reference road section of a target reference route, determining a traffic speed corresponding to the target reference road section according to the current time, wherein the target reference route is any of the plurality of reference routes;
for each target reference road section of the target reference route, determining a route length of the target reference road section;
determining estimated duration of the target reference route according to the route length and the traffic speed corresponding to each target reference road section of the target reference route; and
determining the evaluation value of the target reference route according to the estimated duration.

4. The method of claim 1, wherein obtaining the plurality of network speeds by determining the network speed corresponding to each of the plurality of navigation road sections according to the plurality of historical usage record sets comprises:
obtaining a plurality of network speeds and a plurality of usage frequencies, by determining a network speed of the mobile data network used by the electronic device through each of a plurality of antennas of the electronic device and a usage frequency of each of the plurality of antennas of the electronic device according to the plurality of historical usage record sets;
obtaining a plurality of weights by determining a weight of each of the plurality of antennas according to the plurality of usage frequencies; and
determining a network speed corresponding to a reference navigation road section according to the plurality of network speeds and the plurality of weights, wherein the reference navigation road section is any of the plurality of navigation road sections.

5. The method of claim 1, further comprising:
determining (S303) a network speed of the preset wireless network;
obtaining (S305), according to a historical usage record set of the mobile data network used by the electronic device at the target road section, driving information corresponding to the target road section in response to the network speed of the preset wireless network being less than the preset threshold;
generating (S306) the navigation information according to the driving information; and
providing (S307) the navigation information in response to the electronic device arriving at an origin of the target road section.

6. The method of claim 5, wherein determining the network speed of the preset wireless network comprises:
determining a performance parameter of a network device corresponding to the preset wireless network;
determining an estimated network speed according to the performance parameter of the network device;
determining a relative distance between the network device and the electronic device;
determining a driving speed of the electronic device at the target road section, wherein the driving information corresponding to the target road section comprises the driving speed;
determining a network-rate influence value according to the relative distance and the driving speed; and
determining a product between the network-rate influence value and the estimated network speed as the network speed of the preset wireless network.

7. The method of claim 1, further comprising:
obtaining a plurality of speed limits by determining a speed limit of each of a plurality of navigation road sections of the navigation route; and
determining the preset threshold according to the plurality of speed limits.

8. The method of any of claims 1 to 7, further comprising:
searching for a plurality of reference wireless networks corresponding to the target road section;
obtaining a plurality of performance parameters by obtaining a performance parameter of each of the plurality of reference wireless networks;
obtaining a plurality of network-quality values by obtaining a network-quality value of each of the plurality of reference wireless networks according to the plurality of performance parameters; and
determining a reference wireless network corresponding to the maximum value in the plurality of network-quality values as the preset wireless network.

9. An electronic device (400), comprising:
a processor (410);
a memory (420);
a communication interface (430); and
one or more programs (440), stored in the memory and configured to be executed by the processor;
the programs comprising instructions which are operable with the processor to execute the method of any of claims 1 to 8.

10. A computer-readable storage medium, storing computer programs which are operable with a computer to execute the method of any of claims 1 to 8.

## Patentansprüche

1. Navigationsverfahren für eine elektronische Vorrichtung (400), umfassend:
Bestimmen (S101, S301) einer Navigationsroute der elektronischen Vorrichtung, wobei die Navigationsroute eine Vielzahl von Navigationsstraßenabschnitten umfasst;
Bestimmen (S102, S302) mindestens eines Zielstraßenabschnitts auf der Navigationsroute; und
Verbinden (S103) der elektronischen Vorrichtung mit einem voreingestellten Drahtlosnetzwerk, das dem Zielstraßenabschnitt entspricht, während sich die elektronische Vorrichtung auf dem Zielstraßenabschnitt befindet, und Bereitstellen (S103) von Navigationsinformationen, die dem Zielstraßenabschnitt entsprechen, über das voreingestellte Drahtlosnetzwerk, wobei das voreingestellte Drahtlosnetzwerk ein Wi-Fi-Netzwerk oder ein Bluetooth-Netzwerk ist; und
wobei das Bestimmen des mindestens einen Zielstraßenabschnitts auf der Navigationsroute das Erhalten einer Vielzahl von historischen Nutzungsdatensätzen durch Erhalten eines historischen Nutzungsdatensatzes des durch die elektronische Vorrichtung in jedem der Vielzahl von Navigationsstraßenabschnitten verwendeten Mobildatennetzwerks umfasst;
Erhalten einer Vielzahl von Netzwerkgeschwindigkeiten durch Bestimmen einer Netzwerkgeschwindigkeit, die jedem der Vielzahl von Navigationsstraßenabschnitten entspricht, gemäß der Vielzahl von historischen Nutzungsdatensätzen, wobei der historische Nutzungsdatensatz, der einem der Vielzahl von Navigationsstraßenabschnitten entspricht, eine Vielzahl von historischen Nutzungsdatensätzen des Mobildatennetzwerks umfasst, das durch die elektronische Vorrichtung in dem Navigationsstraßenabschnitt verwendet wird, und jeder der Vielzahl von historischen Nutzungsdatensätzen eine Netzwerkgeschwindigkeit umfasst; und
Bestimmen mindestens eines Zielstraßenabschnitts, wobei der Zielstraßenabschnitt der Netzwerkgeschwindigkeit entspricht, die kleiner als ein voreingestellter Schwellenwert unter der Vielzahl von Navigationsstraßenabschnitten ist, die der Vielzahl von Netzwerkgeschwindigkeiten entsprechen.

2. Verfahren gemäß Anspruch 1, wobei das Bestimmen der Navigationsroute der elektronischen Vorrichtung umfasst:
Bestimmen eines Ausgangsortes und eines Zielortes der elektronischen Vorrichtung;
Suchen einer Vielzahl von Referenzrouten zwischen dem Ausgangsort und dem Zielort;
Erhalten einer Vielzahl von Beurteilungswerten durch Bestimmen eines Beurteilungswertes für jede der Vielzahl von Referenzrouten; und
Auswählen einer Referenzroute, die dem Maximalwert in der Vielzahl von Auswertungswerten entspricht, als Navigationsroute.

3. Verfahren gemäß Anspruch 2, wobei das Erhalten der Vielzahl von Auswertungswerten durch Bestimmen des Beurteilungswertes jeder der Vielzahl von Referenzrouten umfasst:
Bestimmen einer aktuellen Uhrzeit der elektronischen Vorrichtung;
für jeden Zielreferenzstraßenabschnitt einer Zielreferenzroute Bestimmen einer dem Zielreferenzstraßenabschnitt entsprechenden Verkehrsgeschwindigkeit gemäß der aktuellen Uhrzeit, wobei die Zielreferenzroute eine beliebige aus der Vielzahl von Referenzrouten ist;
für jeden Zielreferenzstraßenabschnitt der Zielreferenzroute Bestimmen einer Routenlänge des Zielreferenzstraßenabschnitts;
Bestimmen der geschätzten Dauer der Zielreferenzroute gemäß der Routenlänge und der Verkehrsgeschwindigkeit, die jedem Zielreferenzstraßenabschnitt der Zielreferenzroute entsprechen; und
Bestimmen des Beurteilungswertes der Zielreferenzroute gemäß der geschätzten Dauer.

4. Verfahren gemäß Anspruch 1, wobei das Erhalten der Vielzahl von Netzwerkgeschwindigkeiten durch Bestimmen der Netzwerkgeschwindigkeit, die jedem der Vielzahl von Navigationsstraßenabschnitten entspricht, gemäß der Vielzahl von historischen Nutzungsdatensätzen umfasst:
Erhalten einer Vielzahl von Netzwerkgeschwindigkeiten und einer Vielzahl von Nutzungsfrequenzen durch Bestimmen einer Netzwerkgeschwindigkeit des Mobildatennetzwerks, das durch die elektronische Vorrichtung über jede einer Vielzahl von Antennen der elektronischen Vorrichtung verwendet wird, und einer Nutzungsfrequenz jeder der Vielzahl von Antennen der elektronischen Vorrichtung gemäß der Vielzahl von historischen Nutzungsdatensätzen;
Erhalten einer Vielzahl von Gewichtungen durch Bestimmen einer Gewichtung jeder der Vielzahl von Antennen gemäß der Vielzahl von Nutzungsfrequenzen; und
Bestimmen einer Netzwerkgeschwindigkeit, die einem Referenznavigationsstraßenabschnitt entspricht, gemäß der Vielzahl von Netzwerkgeschwindigkeiten und der Vielzahl von Gewichtungen, wobei der Referenznavigationsstraßenabschnitt ein beliebiger der Vielzahl von Navigationsstraßenabschnitten ist.

5. Verfahren gemäß Anspruch 1, ferner umfassend:
Bestimmen (S303) einer Netzwerkgeschwindigkeit des voreingestellten Drahtlosnetzwerks:
Erhalten (S305) von Fahrinformationen, die dem Zielstraßenabschnitt entsprechen, gemäß einem historischen Nutzungsdatensatz des Mobildatennetzwerks, das durch die elektronische Vorrichtung in dem Zielstraßenabschnitt verwendet wird, als Reaktion darauf, dass die Netzwerkgeschwindigkeit des voreingestellten Drahtlosnetzwerks kleiner als der voreingestellte Schwellenwert ist;
Erzeugen (S306) der Navigationsinformationen gemäß den Fahrinformationen; und
Bereitstellen (S307) der Navigationsinformationen als Reaktion darauf, dass die elektronische Vorrichtung an einem Ausgangsort des Zielstraßenabschnitts ankommt.

6. Verfahren gemäß Anspruch 5, wobei das Bestimmen der Netzwerkgeschwindigkeit des voreingestellten Drahtlosnetzwerks umfasst:
Bestimmen eines Leistungsparameters einer Netzwerkvorrichtung, die dem voreingestellten Drahtlosnetzwerk entspricht;
Bestimmen einer geschätzten Netzwerkgeschwindigkeit gemäß dem Leistungsparameter der Netzwerkvorrichtung;
Bestimmen einer relativen Entfernung zwischen der Netzwerkvorrichtung und der elektronischen Vorrichtung;
Bestimmen einer Fahrgeschwindigkeit der elektronischen Vorrichtung auf dem Zielstraßenabschnitt, wobei die dem Zielstraßenabschnitt entsprechenden Fahrinformationen die Fahrgeschwindigkeit umfassen;
Bestimmen eines Netzwerkrateneinflusses gemäß der relativen Entfernung und der Fahrgeschwindigkeit; und
Bestimmen eines Produkts zwischen dem Wert des Netzwerkrateneinflusses und der geschätzten Netzwerkgeschwindigkeit als Netzwerkgeschwindigkeit des voreingestellten Drahtlosnetzwerks.

7. Verfahren gemäß Anspruch 1, ferner umfassend:
Erhalten einer Vielzahl von Geschwindigkeitsbegrenzungen durch Bestimmen einer Geschwindigkeitsbegrenzung für jeden einer Vielzahl von Navigationsstraßenabschnitten der Navigationsroute; und
Bestimmen des voreingestellten Schwellenwerts gemäß der Vielzahl von Geschwindigkeitsbegrenzungen.

8. Verfahren gemäß einem der Ansprüche 1 bis 7, ferner umfassend:
Suchen einer Vielzahl von Referenzdrahtlosnetzwerken, die dem Zielstraßenabschnitt entsprechen;
Erhalten einer Vielzahl von Leistungsparametern durch Erhalten eines Leistungsparameters von jedem aus der Vielzahl von Referenzdrahtlosnetzwerken;
Erhalten einer Vielzahl von Netzwerkqualitätswerten durch Erhalten eines Netzwerkqualitätswertes von jedem der Vielzahl von Referenzdrahtlosnetzwerken gemäß der Vielzahl von Leistungsparametern; und
Bestimmen eines Referenzdrahtlosnetzwerks, das dem Maximalwert in der Vielzahl von Netzwerkqualitätswerten entspricht, als das voreingestellte Drahtlosnetzwerk.

9. Elektronische Vorrichtung (400), umfassend:
einen Prozessor (410);
einen Speicher (420);
eine Kommunikationsschnittstelle (430); und
ein oder mehrere Programme (440), die in dem Speicher gespeichert und dazu ausgelegt sind, durch den Prozessor ausgeführt zu werden;
wobei die Programme Anweisungen umfassen, die mit dem Prozessor dazu betreibbar sind, das Verfahren gemäß einem der Ansprüche 1 bis 8 auszuführen.

10. Computerlesbares Speichermedium, das Computerprogramme speichert, die mit einem Computer dazu betreibbar sind, das Verfahren gemäß einem der Ansprüche 1 bis 8 auszuführen.

## Revendications

1. Procédé de navigation, pour un dispositif électronique (400), comprenant :
la détermination (S101, S301) d'un itinéraire de navigation du dispositif électronique, dans lequel l'itinéraire de navigation comprend une pluralité de sections de route de navigation ;
la détermination (S102, S302) d'au moins une section de route cible dans l'itinéraire de navigation ; et
la connexion (S103) du dispositif électronique à un réseau sans fil prédéfini correspondant à la section de route cible pendant que le dispositif électronique se trouve à la section de route cible, et la fourniture (S103) d'informations de navigation correspondant à la section de route cible par l'intermédiaire du réseau sans fil prédéfini, dans lequel le réseau sans fil prédéfini est un réseau Wi-Fi ou un réseau Bluetooth ; et
dans lequel la détermination d'au moins une section de route cible dans l'itinéraire de navigation comprend :
l'obtention d'une pluralité d'ensembles d'enregistrements d'historique d'utilisation, par l'obtention d'un ensemble d'enregistrements d'historique d'utilisation du réseau de données mobile utilisé par le dispositif électronique à chacune de la pluralité de sections de route de navigation ;
l'obtention d'une pluralité de vitesses de réseau, par la détermination d'une vitesse de réseau correspondant à chacune de la pluralité de sections de route de navigation en fonction de la pluralité d'ensembles d'enregistrements d'historique d'utilisation, dans lequel l'ensemble d'enregistrements d'historique d'utilisation correspondant à l'une de la pluralité de sections de route de navigation comprend une pluralité d'enregistrements d'historique d'utilisation du réseau de données mobile utilisé par le dispositif électronique à la section de route de navigation, et chacun de la pluralité d'enregistrements d'historique d'utilisation comprend une vitesse de réseau ; et
la détermination d'au moins une section de route cible, dans lequel la section de route cible correspond au fait que la vitesse de réseau est inférieure à un seuil prédéfini parmi ladite pluralité de sections de route de navigation correspondant à ladite pluralité de vitesses de réseau.

2. Procédé selon la revendication 1, dans lequel la détermination de l'itinéraire de navigation du dispositif électronique comprend :
la détermination d'une origine et d'une destination du dispositif électronique ;
la recherche d'une pluralité d'itinéraires de référence entre l'origine et la destination ;
l'obtention d'une pluralité de valeurs d'évaluation par la détermination d'une valeur d'évaluation de chacun de la pluralité d'itinéraires de référence ; et
la sélection d'un itinéraire de référence correspondant à la valeur maximale dans la pluralité de valeurs d'évaluation en tant qu'itinéraire de navigation.

3. Procédé selon la revendication 2, dans lequel l'obtention de la pluralité de valeurs d'évaluation par la détermination de la valeur d'évaluation de chacun de la pluralité d'itinéraires de référence comprend :
la détermination d'une heure courante du dispositif électronique ;
pour chaque section de route de référence cible d'un itinéraire de référence cible, la détermination d'une vitesse de trafic correspondant à la section de route de référence cible en fonction de l'heure courante, dans lequel l'itinéraire de référence cible est l'un quelconque de la pluralité d'itinéraires de référence ;
pour chaque section de route de référence cible de l'itinéraire de référence cible, la détermination d'une longueur d'itinéraire de la section de route de référence cible ;
la détermination d'une durée estimée de l'itinéraire de référence cible en fonction de la longueur d'itinéraire et de la vitesse de trafic correspondant à chaque section de route de référence cible de l'itinéraire de référence cible ; et
la détermination de la valeur d'évaluation de l'itinéraire de référence cible en fonction de la durée estimée.

4. Procédé selon la revendication 1, dans lequel l'obtention de la pluralité de vitesses de réseau par la détermination de la vitesse de réseau correspondant à chacune de la pluralité de sections de route de navigation en fonction de la pluralité d'ensembles d'enregistrements d'historique d'utilisation comprend :
l'obtention d'une pluralité de vitesses de réseau et d'une pluralité de fréquences d'utilisation, par la détermination d'une vitesse de réseau du réseau de données mobile utilisé par le dispositif électronique à travers chacune d'une pluralité d'antennes du dispositif électronique et d'une fréquence d'utilisation de chacune de la pluralité d'antennes du dispositif électronique en fonction de la pluralité d'ensembles d'enregistrements d'historique d'utilisation ;
l'obtention d'une pluralité de poids par la détermination d'un poids de chacune de la pluralité d'antennes en fonction de la pluralité de fréquences d'utilisation ; et
la détermination d'une vitesse de réseau correspondant à une section de route de navigation de référence en fonction de la pluralité de vitesses de réseau et de la pluralité de poids, dans lequel la section de route de navigation de référence est l'une quelconque de la pluralité de sections de route de navigation.

5. Procédé selon la revendication 1, comprenant en outre :
la détermination (S303) d'une vitesse de réseau du réseau sans fil prédéfini ;
l'obtention (S305), en fonction d'un ensemble d'enregistrements d'historique d'utilisation du réseau de données mobile utilisé par le dispositif électronique à la section de route cible, d'informations de déplacement correspondant à la section de route cible en réponse au fait que la vitesse de réseau du réseau sans fil prédéfini est inférieure au seuil prédéfini ;
la génération (S306) des informations de navigation en fonction des informations de déplacement ; et
la fourniture (S307) des informations de navigation en réponse à l'arrivée du dispositif électronique à une origine de la section de route cible.

6. Procédé selon la revendication 5, dans lequel la détermination de la vitesse de réseau du réseau sans fil prédéfini comprend :
la détermination d'un paramètre de performance d'un dispositif de réseau correspondant au réseau sans fil prédéfini ;
la détermination d'une vitesse de réseau estimée en fonction du paramètre de performance du dispositif de réseau ;
la détermination d'une distance relative entre le dispositif de réseau et le dispositif électronique ;
la détermination d'une vitesse de déplacement du dispositif électronique à la section de route cible, dans lequel les informations de déplacement correspondant à la section de route cible comprennent la vitesse de déplacement ;
la détermination d'une valeur d'influence de débit de réseau en fonction de la distance relative et de la vitesse de déplacement ; et
la détermination d'un produit entre la valeur d'influence de débit de réseau et la vitesse de réseau estimée en tant que vitesse de réseau du réseau sans fil prédéfini.

7. Procédé selon la revendication 1, comprenant en outre :
l'obtention d'une pluralité de limites de vitesse par la détermination d'une limite de vitesse de chacune de la pluralité de sections de route de navigation de l'itinéraire de navigation ; et
la détermination du seuil prédéfini en fonction de la pluralité de limites de vitesse.

8. Procédé selon l'une quelconque des revendications 1 à 7, comprenant en outre :
la recherche d'une pluralité de réseaux sans fil de référence correspondant à la section de route cible ;
l'obtention d'une pluralité de paramètres de performance par l'obtention d'un paramètre de performance de chacun de la pluralité de réseaux sans fil de référence ;
l'obtention d'une pluralité de valeurs de qualité de réseau par l'obtention d'une valeur de qualité de réseau de chacun de la pluralité de réseaux sans fil de référence en fonction de la pluralité de paramètres de performance ; et
la détermination d'un réseau sans fil de référence correspondant à la valeur maximale dans la pluralité de valeurs de qualité de réseau en tant que réseau sans fil prédéfini.

9. Dispositif électronique (400), comprenant :
un processeur (410) ;
une mémoire (420) ;
une interface de communication (430) ; et
un ou plusieurs programmes (440) stockés dans la mémoire et configurés pour être exécutés par le processeur ;
les programmes comprenant des instructions qui peuvent être utilisées par le processeur pour exécuter le procédé selon l'une quelconque des revendications 1 à 8.

10. Support de stockage lisible par ordinateur, stockant des programmes informatiques qui peuvent être utilisés par un ordinateur pour exécuter le procédé selon l'une quelconque des revendications 1 à 8.
